# EUROPEAN PATENT APPLICATION

(11) **EP 4 571 483 A1**
(43) Date of publication of application: **18.06.2025**
(21) Application number: 23881793.6
(22) Date of filing: 23.10.2023
(51) Int. Cl.: G06F 3/14

(54) **SCREEN MIRRORING METHOD AND APPARATUS, VEHICLE, AND STORAGE MEDIUM**

(30) Priority: 25.10.2022 CN 202211308229
(71) Applicant: Nio Smart Technology Co., Ltd., Shanghai 201800 (CN)
(72) Inventor: CHANG, Bin, Shanghai 201800 (CN)
(74) Representative: Torggler & Hofmann Patentanwälte - Innsbruck
(86) International application number: PCT/CN2023/125950
(87) International publication number: WO 2024/088215

(57) **Abstract**

The disclosure relates to a screen mirroring method and apparatus, a vehicle, a storage medium, and a computer program product. The method includes: sending a communication connection signal to an electronic device within a preset range in response to a preset trigger operation for a power-on signal of a head unit of a vehicle; obtaining an action status of a target object corresponding to a vehicle seat when a matching signal fed back by the electronic device is received; and displaying a display interface of the electronic device on the head unit when the action status meets a preset condition. Through the use of the method, a screen mirroring procedure can be optimized and user experience can be improved.

## Description

### TECHNICAL FIELD

The disclosure relates to the field of vehicle technologies, and in particular, to a screen mirroring method and apparatus, a vehicle and a storage medium.

### BACKGROUND

With the development of vehicle intelligence technologies, a vehicle connectivity technology emerges, which interconnects and maps a vehicle and a mobile phone. Specifically, a mobile phone is mirrored to an on-board display, through which navigation, videos, music, games, and other functions of the mobile phone can be operated, thereby improving user experience.

However, in conventional vehicle connectivity technologies, users are usually required to perform complicated screen mirroring operations on a mobile phone or vehicle to realize screen mirroring. Therefore, a screen mirroring implementation process in the conventional technologies is cumbersome.

### SUMMARY

In view of this, in order to resolve the foregoing technical problem, it is necessary to provide a screen mirroring method and apparatus, a vehicle, a storage medium, and a computer program product for optimizing a screen mirroring procedure and saving interaction resources.

According to a first aspect, an embodiment of the disclosure provides a screen mirroring method. The method includes:
sending a communication connection signal to an electronic device within a preset range in response to a preset trigger operation for a power-on signal of a head unit of a vehicle;
obtaining an action status of a target object corresponding to a vehicle seat when a matching signal fed back by the electronic device is received; and
displaying a display interface of the electronic device on the head unit when the action status meets a preset condition.

In one embodiment, the obtaining an action status of a target object corresponding to a vehicle seat includes:
obtaining scanned image data of the vehicle seat; and
determining, based on the scanned image data, the action status of the target object corresponding to the vehicle seat.

In one embodiment, the action status includes a target object-present state, and the displaying a display interface of the electronic device on the head unit when the action status meets a preset condition includes:
obtaining, when the action status is the target object-present state, a first moment at which the action status transitions to the target object-present state and a second moment at which a seat belt status corresponding to the vehicle seat transitions to a locked state; and
displaying the display interface of the electronic device on the head unit when a duration between the first moment and the second moment is within a preset duration.

In one embodiment, the preset condition includes that the action status is the target object-present state and that the duration between the first moment and the second moment is within the preset duration, and after the obtaining an action status of a target object corresponding to a vehicle seat, the method further includes:
displaying a screen mirroring operation interface on the head unit when the action status does not meet the preset condition.

In one embodiment, after the displaying a screen mirroring operation interface on the head unit, the method further includes:
receiving a trigger operation for rejecting screen mirroring in the screen mirroring operation interface, and presenting the screen mirroring operation interface in the form of a floating window.

In one embodiment, the preset condition includes that the action status is a target object-absent state and that a vehicle door of the vehicle is in a closed state, and after the obtaining an action status of a target object corresponding to a vehicle seat, the method further includes:
switching to a power-off state when the action status does not meet the preset condition.

In one embodiment, the sending a communication connection signal to an electronic device within a preset range includes:
sending the communication connection signal to an electronic device within the preset range that is in a communicatively connected state, where the electronic device is in the communicatively connected state when the vehicle is unlocked.

In one embodiment, the preset trigger operation includes that the vehicle door is opened to a preset angle.

According to a second aspect, an embodiment of the disclosure further provides a screen mirroring apparatus. The apparatus includes:
a sending module, configured to send a communication connection signal to an electronic device within a preset range in response to a preset trigger operation for a power-on signal of a head unit of a vehicle;
an obtaining module, configured to obtain an action status of a target object corresponding to a vehicle seat when a matching signal fed back by the electronic device is received; and
a display module, configured to display a display interface of the electronic device on the head unit when the action status meets a preset condition.

In one embodiment, the obtaining module includes:
a first obtaining sub-module, configured to obtain scanned image data of the vehicle seat; and
a determining module, configured to determine, according to the scanned image data, the action status of the target object corresponding to the vehicle seat.

In one embodiment, the action status includes a target object-present state, and the display module includes:
a second obtaining sub-module, configured to obtain, when the action status is the target object-present state, a first moment at which the action status transitions to the target object-present state and a second moment at which a seat belt status corresponding to the vehicle seat transitions to a locked state; and
a first display sub-module, configured to display the display interface of the electronic device on the head unit when a duration between the first moment and the second moment is within a preset duration.

In one embodiment, after the obtaining module, the apparatus further includes:
a second display sub-module, configured to display a screen mirroring operation interface on the head unit when the action status does not meet the preset condition.

In one embodiment, after the second display sub-module, the apparatus further includes:
a presentation module, configured to receive a trigger operation for rejecting screen mirroring in the screen mirroring operation interface, and present the screen mirroring operation interface in the form of a floating window.

In one embodiment, after the obtaining module, the apparatus further includes:
a switching module, configured to switch to a power-off state when the action status does not meet the preset condition.

In one embodiment, the sending module includes:
a sending sub-module, configured to send the communication connection signal to an electronic device within the preset range that is in a communicatively connected state, where the electronic device is in the communicatively connected state when the vehicle is unlocked.

In one embodiment, the preset trigger operation includes that the vehicle door is opened to a preset angle.

According to a third aspect, an embodiment of the disclosure further provides a vehicle. The vehicle includes a memory and a processor. The memory stores a computer program. When the processor executes the computer program, the steps of the method according to any one of the embodiments of the disclosure are implemented.

According to a fourth aspect, an embodiment of the disclosure further provides a computer-readable storage medium. The computer-readable storage medium has a computer program stored thereon. When the computer program is executed by a processor, the steps of the method according to any one of the embodiments of the disclosure are implemented.

According to a fifth aspect, an embodiment of the disclosure further provides a computer program product. The computer program product includes a computer program. When the computer program is executed by a processor, the steps of the method according to any one of the embodiments of the disclosure are implemented.

In the embodiments of the disclosure, in response to the preset trigger operation for the power-on signal of the head unit of the vehicle, the head unit is powered on, and sends the communication connection signal to the electronic device within the preset range. After receiving the communication connection signal, the corresponding electronic device feeds back the matching signal. The head unit receives the matching signal, so that automatic connection and matching between the head unit and the electronic device are realized. The action status of the target object corresponding to the vehicle seat is obtained after the matching signal is received. The display interface of the electronic device is displayed on the head unit in the case that the action status meets the preset condition, so that automatic screen mirroring to the head unit is realized. Screen mirroring to the head unit can be realized according to the preset trigger operation and the action status of the target object, with no need for a user to perform cumbersome screen mirroring operations on the vehicle or the electronic device, thereby optimizing the screen mirroring procedure. In this way, vehicle connectivity is more intelligent, interaction resources are saved, and user experience is improved.

### BRIEF DESCRIPTION OF DRAWINGS

FIG. 1 is a schematic flowchart of a screen mirroring method according to an embodiment;
FIG. 2 is a schematic flowchart of a screen mirroring method according to an embodiment;
FIG. 3 is a schematic flowchart of a screen mirroring method according to an embodiment;
FIG. 4 is a schematic flowchart of a screen mirroring method according to an embodiment;
FIG. 5 is a block diagram of a structure of a screen mirroring apparatus according to an embodiment; and
FIG. 6 is a diagram of an internal structure of a vehicle according to an embodiment.

### DETAILED DESCRIPTION OF EMBODIMENTS

In order to make the objective, technical solutions, and advantages of the embodiments of the disclosure clearer, the embodiments of the disclosure are further described in detail below with reference to the accompanying drawings and the embodiments. It should be understood that the specific embodiments described herein are merely used to explain the embodiments of the disclosure and are not intended to limit the embodiments of the disclosure.

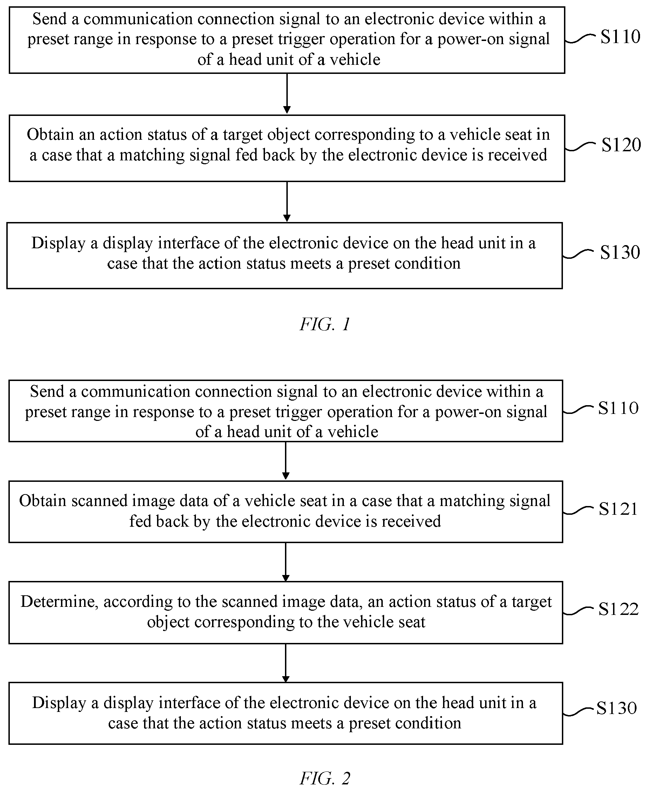

In one embodiment, as shown in FIG. 1, a screen mirroring method is provided. The method includes the following steps.

Step S110: Send a communication connection signal to an electronic device within a preset range in response to a preset trigger operation for a power-on signal of a head unit of a vehicle.

In this embodiment of the disclosure, in response to the preset trigger operation for the power-on signal of the head unit of the vehicle, the head unit is powered on, and sends the communication connection signal to the electronic device within the preset range. The preset trigger operation for the power-on signal of the head unit is set in advance according to actual scenarios. In response to the preset trigger operation, the power-on signal of the head unit is triggered, and the head unit is powered on. In this embodiment, the preset trigger operation may include but is not limited to unlocking of the vehicle, a vehicle door being in a preset state, the vehicle door being opened to a preset angle, or the like. The preset range is usually an appropriate range set according to actual application scenarios. In one example, after the head unit is powered on, a communication connection function, such as Wi-Fi or Bluetooth, is automatically enabled, and the communication connection signal is sent to the electronic device within the preset range, where the communication connection signal may include but is not limited to a communication matching signal. In one example, this embodiment is applied to the head unit of the vehicle. In some possible implementations, a duration between unlocking of the vehicle and power-on of the head unit is limited to a preset duration, e.g., 15s, to ensure user experience and intelligent vehicle connectivity.

Step S120: Obtain an action status of a target object corresponding to a vehicle seat when a matching signal fed back by the electronic device is received.

In this embodiment of the disclosure, after the head unit sends the communication connection signal, the electronic device receives the communication connection signal, then establishes a communication connection, and feeds back the matching signal. In one example, after the head unit sends the communication connection signal, an electronic device within the preset range that has a preset communication connection relationship with the head unit receives the communication connection signal, establishes a communication connection, and feeds back a matching signal, where the preset communication connection relationship is usually set in advance. For example, a Bluetooth matching relationship between the electronic device and the head unit is established in advance. The action status of the target object corresponding to the vehicle seat is obtained after the matching signal fed back by the electronic device is received, where the vehicle seat may be a preset vehicle seat, or may be at least a part of the vehicle seats, and the target object includes a user corresponding to the vehicle seat. In one example, the action status of the target object may include but is not limited to the target object being present and the target object being absent, the target object fastening a seat belt and the target object fastening no seat belt, or the like. In some possible implementations, the action status of the target object corresponding to the vehicle seat may be obtained through, including but not limited to, data from a seat cushion sensor of the vehicle seat, an image sent by an image scanning apparatus, data from a seat belt sensor corresponding to the vehicle seat, or the like, where the seat cushion sensor may include but is not limited to a seat cushion pressure sensor, a seat cushion temperature sensor, or the like.

Step S130: Display a display interface of the electronic device on the head unit when the action status meets a preset condition.

In this embodiment of the disclosure, after the action status of the target object corresponding to the vehicle seat is obtained, the action status of the target object is determined. The display interface of the electronic device is displayed on the head unit in the case that the action status of the target object meets the preset condition, where the preset condition is set in advance according to actual scenarios. In one example, the preset condition may be set as that the target object is present, or that the target object fastens the seat belt, which is not limited in the disclosure. The display interface of the electronic device is displayed on the head unit, that is, screen mirroring to the head unit is realized. All display interfaces of the electronic device may be displayed on the head unit, or a part of the display interfaces of the electronic device may be displayed on the head unit, for example, a display interface of a part of applications in the electronic device.

In this embodiment of the disclosure, in response to the preset trigger operation for the power-on signal of the head unit of the vehicle, the head unit is powered on, and sends the communication connection signal to the electronic device within the preset range. After receiving the communication connection signal, the corresponding electronic device feeds back the matching signal. The head unit receives the matching signal, so that automatic connection and matching between the head unit and the electronic device are realized. The action status of the target object corresponding to the vehicle seat is obtained after the matching signal is received. The display interface of the electronic device is displayed on the head unit in the case that the action status meets the preset condition, so that automatic screen mirroring to the head unit is realized. Screen mirroring to the head unit can be realized according to the preset trigger operation and the action status of the target object, with no need for a user to perform cumbersome screen mirroring operations on the vehicle or the electronic device, thereby optimizing the screen mirroring procedure. In this way, vehicle connectivity is more intelligent, interaction resources are saved, and user experience is improved.

In one embodiment, as shown in FIG. 2, the obtaining an action status of a target object corresponding to a vehicle seat includes:
step S121: obtaining scanned image data of the vehicle seat; and
step S 122: determining, according to the scanned image data, the action status of the target object corresponding to the vehicle seat.

In this embodiment of the disclosure, the scanned image data of the vehicle seat is obtained, where the scanned image data may be obtained by an image scanning apparatus disposed in the vehicle. In one example, scanned image data of a preset vehicle seat may be obtained, such as scanned image data of a driver's seat or scanned image data of a passenger seat, or scanned image data of all vehicle seats may be obtained, which may be determined according to actual scenarios. In some possible implementations, a trigger signal of the image scanning apparatus may include but is not limited to power-on of the head unit. That is, upon power-on of the head unit, the image scanning apparatus is started to scan the inside of the vehicle, and obtains the corresponding scanned image data. When the action status of the target object corresponding to the vehicle seat is determined according to the obtained scanned image data, the obtained scanned image data may be analyzed by using a preset image recognition algorithm to determine the action status of the corresponding target object.

In this embodiment of the disclosure, the action status of the target object corresponding to the vehicle seat is determined by analyzing vehicle seat scanning data, and therefore whether to authorize screen mirroring can be determined according to the action status, ensuring implementation of subsequent automatic screen mirroring. The action status of the target object can be determined more accurately by analyzing the image data, so that the action status is determined more accurately subsequently, ensuring accuracy of a screen mirroring occasion. In this way, vehicle connectivity is more intelligent, and user experience is improved.

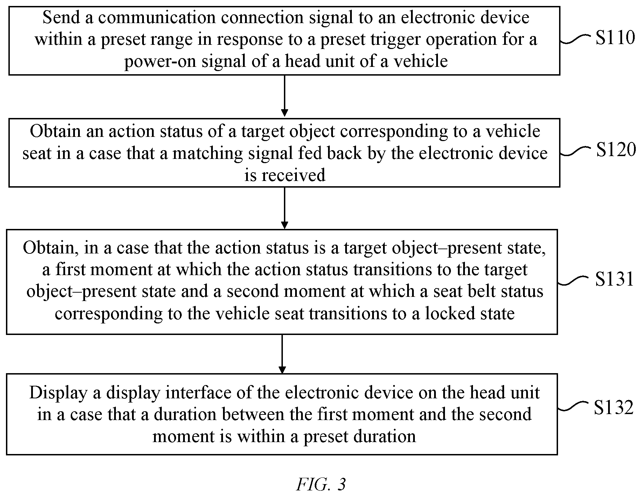

In one embodiment, as shown in FIG. 3, the action status includes a target object-present state, and the displaying a display interface of the electronic device on the head unit when the action status meets a preset condition includes:
step S131: obtaining, when the action status is the target object-present state, a first moment at which the action status transitions to the target object-present state and a second moment at which a seat belt status corresponding to the vehicle seat transitions to a locked state; and
step S132: displaying the display interface of the electronic device on the head unit when a duration between the first moment and the second moment is within a preset duration.

In this embodiment of the disclosure, the action status of the target object includes the target object-present state, and the obtained action status of the target object is determined. In the case that the action status of the target object is the target object-present state, the first moment at which the action status transitions to the target object-present state is obtained, where the transition of the action status may be obtained in a preset obtaining manner, the preset obtaining manner may include but is not limited to obtaining through a seat cushion sensor, an image recognition apparatus, or the like, and a corresponding moment, that is, the first moment, is recorded when the action status transitions to the target object being present. The second moment at which the seat belt status corresponding to the vehicle seat transitions to the locked state is obtained, where the seat belt status may be obtained through a seat belt sensor, the seat belt sensor may be disposed at a seat belt buckle, and when the seat belt status transitions to the locked state, in other words, the seat belt buckle is fastened, a corresponding moment, that is, the second moment, is recorded. The display interface of the electronic device is displayed on the head unit in the case that the duration between the first moment and the second moment is within the preset duration, where the preset duration is usually an appropriate value set in advance according to actual scenarios, for example, 30s. In one example, the target object may be a vehicle user. When it is detected that the action status of the target object of the vehicle seat is the target object-present state, that is, the vehicle user is sitting on the vehicle seat, whether a seat belt corresponding to the vehicle seat is locked in the preset duration is determined. When the seat belt corresponding to the vehicle seat is locked in the preset duration, the display interface of the electronic device is displayed on the head unit. In this embodiment, the preset condition is set to include that the action status is the target object-present state and that the duration between the first moment and the second moment is within the preset duration. In other words, when the action status is the target object-present state and the duration between the first moment and the second moment is within the preset duration, the action status meets the preset condition, and the display interface of the electronic device is displayed on the head unit.

In this embodiment of the disclosure, whether the action status meets the preset condition is determined comprehensively according to the action status and the seat belt status corresponding to the vehicle seat, and in the case that the preset condition is met, the display interface of the electronic device is displayed on the head unit, so that automatic screen mirroring is realized. Whether to perform screen mirroring is determined based on whether the target object is on the vehicle seat and whether the target object fastens the seat belt, and an intention of the user can be determined accurately. When the target object is on the vehicle seat and locks the seat belt in the preset duration, it may be considered that the target object is about to start the vehicle. In this case, screen mirroring is started, with no need for the target object to consider a screen mirroring operation while starting the vehicle, thereby greatly saving interaction resources, improving intelligent vehicle connectivity, and ensuring user experience.

In one embodiment, the preset condition includes that the action status is the target object-present state and that the duration between the first moment and the second moment is within the preset duration, and after the obtaining an action status of a target object corresponding to a vehicle seat, the method further includes:
displaying a screen mirroring operation interface on the head unit when the action status does not meet the preset condition.

In this embodiment of the disclosure, after the action status of the target object corresponding to the vehicle seat is obtained, whether the action status meets the preset condition is determined. The preset condition is usually set according to actual application scenarios. When the action status does not meet the preset condition, an automatic screen mirroring setting is not triggered, the screen mirroring operation interface is displayed on the head unit, and the user manually chooses whether to perform screen mirroring. The user may perform an operation in the screen mirroring operation interface, and choose whether to perform screen mirroring, and the screen mirroring operation interface may include but is not limited to a manual authorization prompt box. In this embodiment, the preset condition is set according to the first moment and the second moment in the foregoing embodiments, and the preset condition may be set to include that the action status is the target object-present state and that the duration between the first moment and the second moment is within the preset duration. In other words, when the action status is the target object-present state and the seat belt is not locked in the preset duration, it is considered that the preset condition is not met. Therefore, the screen mirroring operation interface is displayed. In the case that the action status is the target object-present state and the seat belt is not locked in the preset duration, it may be considered that the target object is staying on the vehicle but does not immediately start the vehicle. Therefore, whether to perform screen mirroring may be selected manually according to requirements.

In this embodiment of the disclosure, in the case that the action status does not meet the preset condition, the screen mirroring operation interface is displayed for the user to make a manual selection. In this way, the user can independently make a selection when automatic screen mirroring is not needed, which is applicable to more scenarios and more suitable for actual application scenarios, further improving accuracy of an automatic screen mirroring occasion and also simplifying the screen mirroring procedure. The screen mirroring operation interface is directly displayed, and the user does not need to perform other operations and can directly make a selection. In this way, vehicle connectivity is more intelligent, and user experience is improved.

In one embodiment, after the displaying a screen mirroring operation interface on the head unit, the method further includes:
receiving a trigger operation for rejecting screen mirroring in the screen mirroring operation interface, and presenting the screen mirroring operation interface in the form of a floating window.

In this embodiment of the disclosure, after the screen mirroring operation interface is displayed, the user may choose, in the screen mirroring operation interface, whether to perform screen mirroring. When the user chooses to reject screen mirroring, the trigger operation for rejecting screen mirroring is received in the screen mirroring operation interface, and the screen mirroring operation interface is represented in the form of the floating window. After the screen mirroring operation interface is represented in the form of the floating window, the user may tap the floating window at any time to bring up the screen mirroring operation interface for screen mirroring. In one example, after the screen mirroring operation interface is represented in the form of the floating window, the user may tap to close the floating window.

In this embodiment of the disclosure, after the user rejects screen mirroring, the screen mirroring operation interface is represented in the form of the floating window, thereby ensuring that the user may tap at any time to start screen mirroring when the user normally uses the head unit without performing other operations, and further simplifying the manual screen mirroring procedure. In this way, vehicle connectivity is more intelligent, and user experience is improved.

In one embodiment, the preset condition includes that the action status is a target object-absent state and that a vehicle door of the vehicle is in a closed state, and after the obtaining an action status of a target object corresponding to a vehicle seat, the method further includes:
switching to a power-off state when the action status does not meet the preset condition.

In this embodiment of the disclosure, the head unit switches to the power-off state in the case that the action status does not meet the preset condition. The preset condition in this embodiment may be set to include that the vehicle door is closed and that the action status of the target object corresponding to the vehicle seat is the target object-absent state. In this case, it may be considered that the user does not enter the vehicle and the vehicle door is closed, and it is determined that an intention of the user is no screen mirroring requirement. The head unit automatically switches to the power-off state. In one example, a vehicle door status may be determined by setting a vehicle door sensor. In one example, in response to a vehicle door closing operation, the action status of the target object corresponding to the vehicle seat is obtained for determining.

In this embodiment of the disclosure, in the case that the vehicle seat corresponds to no target object and the vehicle door is in the closed state, the head unit is powered off, so that the intention of the user can be determined accurately according to the action status. In a state in which there is no target object and the vehicle door is closed, the head unit is powered off, avoiding a waste of resources, realizing automatic power-on and power-off of the head unit, and optimizing the vehicle connectivity procedure. In this way, vehicle connectivity is more intelligent, and user experience is improved.

In one embodiment, the sending a communication connection signal to an electronic device within a preset range includes:
sending the communication connection signal to an electronic device within the preset range that is in a communicatively connected state, where the electronic device is in the communicatively connected state when the vehicle is unlocked.

In this embodiment of the disclosure, there is an association relationship between a vehicle state and a communicatively connected state of a corresponding electronic device. When the vehicle is unlocked, the electronic device automatically starts the communicatively connected state. The automatic start of the communicatively connected state of the electronic device can be realized by setting a binding relationship between the vehicle and the electronic device in advance. In one example, a vehicle key function may be added to the electronic device, and when the electronic device is used to unlock the vehicle, the electronic device automatically starts the communicatively connected state. When the electronic device is in the communicatively connected state, the electronic device receives the communication connection signal sent by the head unit within the preset range.

In this embodiment of the disclosure, the head unit sends the communication connection signal within the preset range. When the vehicle is unlocked, the electronic device is in the communicatively connected state, realizing linkage between the vehicle, the electronic device, and the head unit. The communicatively connected state of the electronic device is started based on the vehicle state, so that the communication connection between the head unit and the electronic device can be realized when the head unit is powered on, further ensuring implementation of subsequent automatic screen mirroring without the need for the user to perform cumbersome operations, and greatly simplifying the screen mirroring procedure. In this way, vehicle connectivity is more intelligent, interaction resources are saved, and user experience is improved.

In one embodiment, the preset trigger operation includes that the vehicle door is opened to a preset angle.

In this embodiment of the disclosure, the preset trigger operation for the power-on signal of the head unit includes that the vehicle door is opened to the preset angle. The vehicle door is opened to the preset angle to trigger the power-on signal of the head unit, and the head unit is powered on, where the preset angle is usually set in advance according to actual scenarios. In one example, the power-on signal of the head unit may be triggered through a circuit connection, a negative circuit is provided on the vehicle door, and a negative circuit is provided on a vehicle support. When the vehicle door is opened to the preset angle, the negative-negative circuits of the vehicle door and the vehicle support are switched on, the power-on signal of the head unit is triggered, and the head unit is powered on. In general, after the head unit is powered on, the preset trigger operation no longer affects the power-on state of the head unit.

In this embodiment of the disclosure, the power-on signal of the head unit is triggered when the vehicle door is opened to the preset angle, so that automatic power-on of the head unit can be realized according to the vehicle state. Determining according to the vehicle door status can make more accurate prediction on the intention of the user. When the vehicle door is opened to the preset angle, it may be considered that the user is about to use the vehicle. In this case, the head unit is started, a power-on operation of the user is not needed, and an operation procedure is simplified. In this way, vehicle connectivity is more intelligent, and user experience is improved.

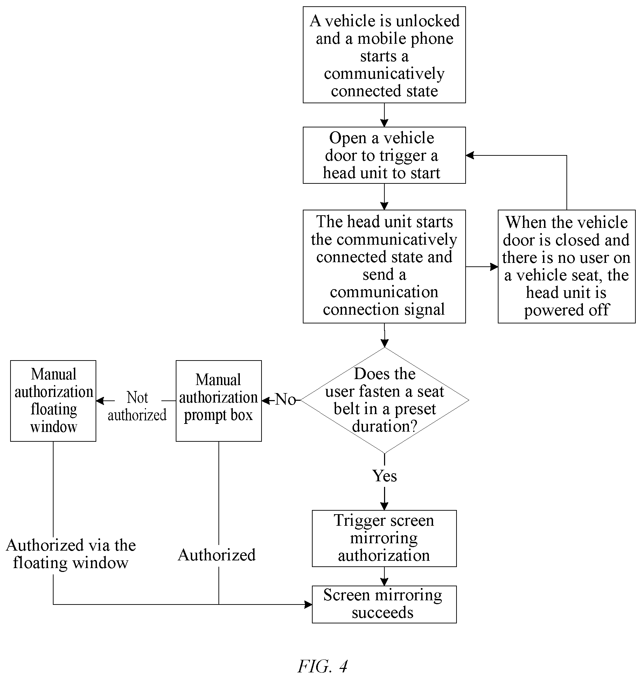

FIG. 4 is a schematic flowchart of a screen mirroring method according to an example embodiment. With reference to FIG. 4, an electronic device includes a mobile phone. In this embodiment, a vehicle key function may be added to the mobile phone. The mobile phone is used to unlock a vehicle. When the vehicle is unlocked, the mobile phone automatically starts a communicatively connected state. For example, the mobile phone automatically starts a Wi-Fi search function, a Bluetooth search function, or the like. A user opens a vehicle door to trigger a power-on signal of a head unit, and the head unit is started. In some possible implementations, a power negative circuit may be provided at the bottom of a door frame and a negative circuit may be provided on a vehicle support. When the vehicle door is opened to a preset angle, e.g., 30 degrees, the door frame is in contact with the vehicle support, negative-negative circuits are switched on, the power-on signal of the head unit is triggered, and a central control display of the head unit is powered on. After the head unit is started, the head unit automatically starts the communicatively connected state. For example, the head unit automatically starts a Wi-Fi function, a Bluetooth function, or the like, and sends a communication connection signal. A corresponding mobile phone receives the communication connection signal and then sends a matching signal, and the head unit and the mobile phone are paired successfully. In one example, the head unit may send an account identification signal through broadcast, and determine an electronic device having an account binding relationship with the vehicle, and the mobile phone scans a broadcast signal sent by the head unit and then performs Bluetooth matching. Whether the user fastens a seat belt in a preset duration is determined. When the user fastens the seat belt in the preset duration, screen mirroring authorization is triggered, automatic screen mirroring is performed, and a display interface of the mobile phone is displayed on the head unit. When the user does not fasten the seat belt in the preset duration, a manual authorization prompt box is displayed for the user to manually choose whether to authorize screen mirroring, and a seat belt buckle may be set as a screen mirroring trigger switch. In one example, when whether the user fastens the seat belt in the preset duration is determined, an image recognition apparatus, such as a 3D face recognition sensing apparatus, is first used, to determine whether there is a user on a corresponding vehicle seat. When there is the user, a countdown is triggered. When the user fastens the seat belt within the countdown, automatic screen mirroring is triggered. When the user does not fasten the seat belt within the countdown, the manual authorization prompt box is displayed. When the user chooses to authorize screen mirroring on the manual authorization prompt box, screen mirroring is triggered, and the display interface of the mobile phone is displayed on the head unit. When the user chooses not to authorize screen mirroring on the manual authorization prompt box, a manual authorization floating window is displayed for the user to tap at any time to choose whether to authorize screen mirroring. In the screen mirroring method of this embodiment, a vehicle door status and a vehicle seat status are also automatically detected. When the vehicle door is closed and no user is on the vehicle seat, the head unit is powered off, so that automatic power-on and power-off of the head unit is realized. In one example, a signal indicating that the vehicle door is in a closed state is received, the image recognition apparatus inside the vehicle is triggered to perform image scanning the inside of the vehicle, and a status of the user inside the vehicle is determined according to a scanned image. When there is no user inside the vehicle, power-off of the head unit is triggered. The signal indicating that the vehicle door is in the closed state may be obtained by a vehicle door sensor or a preset circuit, and the image recognition apparatus may include the 3D face recognition sensing apparatus inside the vehicle. In one example, after screen mirroring succeeds, a smart voice assistant sends a prompt signal to prompt the user that the head unit has entered a screen mirroring state.

In this embodiment of the disclosure, cumbersome screen mirroring operation steps are not needed, and automatic screen mirroring is performed according to comprehensive determining of the vehicle state and the action status of the user, which can be applied to a variety of application scenarios. With a short screen mirroring time and a few steps, the screen mirroring procedure is simplified, and vehicle connectivity is more intelligent.

It should be understood that although the steps in the flowcharts in the accompanying drawings are shown in sequence as indicated by the arrows, these steps are not necessarily executed in the order indicated by the arrows. Unless explicitly stated herein, there is no strict order restriction on the execution of these steps, and these steps can be executed in other orders. Moreover, at least some of the steps in the accompanying drawings may include a plurality of steps or stages. These steps or stages are not necessarily executed at the same time, but may be executed at different times. The execution order of these steps or stages is not necessarily sequential, but they may be executed in turn or alternately with other steps or at least some of the steps or stages in other steps.

Based on the same inventive concept, an embodiment of the disclosure further provides a screen mirroring apparatus for implementing the screen mirroring method described above. The solution provided by the apparatus to resolve the problem is similar to that described in the foregoing method. Therefore, for specific definitions in one or more screen mirroring apparatus embodiments provided below, refer to the foregoing definitions of the screen mirroring method. Details are not described herein again.

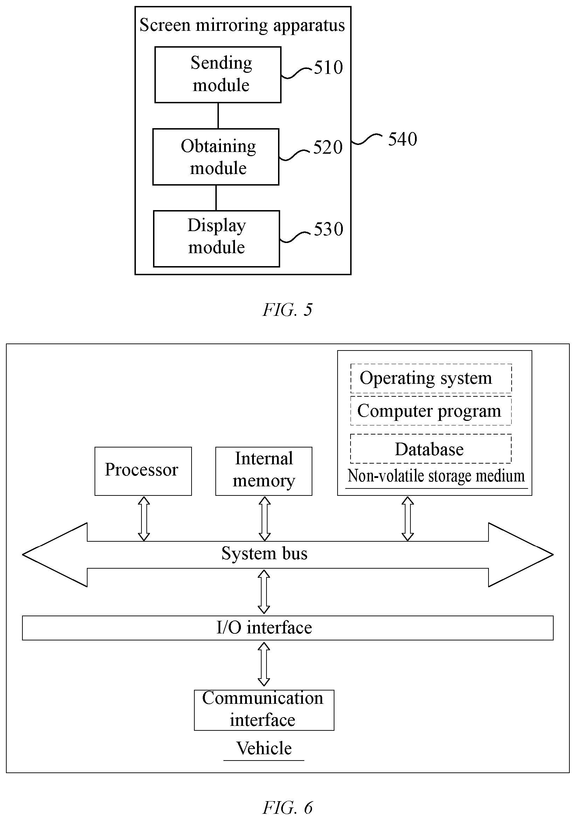

In one embodiment, as shown in FIG. 5, a screen mirroring apparatus 500 is provided, including:
a sending module 510, configured to send a communication connection signal to an electronic device within a preset range in response to a preset trigger operation for a power-on signal of a head unit of a vehicle;
an obtaining module 520, configured to obtain an action status of a target object corresponding to a vehicle seat when a matching signal fed back by the electronic device is received; and
a display module 530, configured to display a display interface of the electronic device on the head unit when the action status meets a preset condition.

In one embodiment, the obtaining module includes:
a first obtaining sub-module, configured to obtain scanned image data of the vehicle seat; and
a determining module, configured to determine, according to the scanned image data, the action status of the target object corresponding to the vehicle seat.

In one embodiment, the action status includes a target object-present state, and the display module includes:
a second obtaining sub-module, configured to obtain, when the action status is the target object-present state, a first moment at which the action status transitions to the target object-present state and a second moment at which a seat belt status corresponding to the vehicle seat transitions to a locked state; and
a first display sub-module, configured to display the display interface of the electronic device on the head unit when a duration between the first moment and the second moment is within a preset duration.

In one embodiment, after the obtaining module, the apparatus further includes:
a second display sub-module, configured to display a screen mirroring operation interface on the head unit when the action status does not meet the preset condition.

In one embodiment, after the second display sub-module, the apparatus further includes:
a presentation module, configured to receive a trigger operation for rejecting screen mirroring in the screen mirroring operation interface, and present the screen mirroring operation interface in the form of a floating window.

In one embodiment, after the obtaining module, the apparatus further includes:
a switching module, configured to switch to a power-off state when the action status does not meet the preset condition.

In one embodiment, the sending module includes:
a sending sub-module, configured to send the communication connection signal to an electronic device within the preset range that is in a communicatively connected state, where the electronic device is in the communicatively connected state when the vehicle is unlocked.

In one embodiment, the preset trigger operation includes that the vehicle door is opened to a preset angle.

All or some of the modules in the foregoing screen mirroring apparatus may be implemented by software, hardware or a combination thereof. Each of the modules described above may be embedded in or independent of a processor of a vehicle in the form of hardware, or may be stored in a memory of the vehicle in the form of software, so that the processor can call and execute the operations corresponding to the modules described above.

In one embodiment, a vehicle is provided. The vehicle may include a server, and a diagram of an internal structure may be shown in FIG. 6. The vehicle includes a processor, a memory, and a network interface that are connected through a system bus. The processor of the vehicle is configured to provide computing and control capabilities. The memory of the vehicle includes a non-volatile storage medium and an internal memory. The non-volatile storage medium stores an operating system, a computer program, and a database. The internal memory provides an environment for operating of the operating system and the computer program in the non-volatile storage medium. The database of the vehicle is configured to store data such as an action status of a target object. The network interface of the vehicle is configured to communicate with an external terminal through a network connection. When the computer program is executed by the processor, a screen mirroring method is implemented.

Those skilled in the art can understand that the structure shown in FIG. 6 is only a block diagram of a partial structure related to the solution of the embodiments of the disclosure, and does not constitute a limitation on the vehicle to which the solution of the embodiments of the disclosure is applied. A specific vehicle may include more or fewer components than shown in the figure, or have some components combined, or have a different arrangement of components.

In one embodiment, a vehicle is further provided, including a memory and a processor. The memory stores a computer program. When the processor executes the computer program, the steps of the foregoing method embodiments are implemented.

In one embodiment, a computer-readable storage medium having a computer program stored thereon is provided. When the computer program is executed by a processor, the steps of the foregoing method embodiments are implemented.

In one embodiment, a computer program product including a computer program is provided. When the computer program is executed by a processor, the steps of the foregoing method embodiments are implemented.

It should be noted that user information (including but not limited to user device information, user personal information, and the like) and data (including but not limited to data used for analysis, stored data, represented data, and the like) involved in the embodiments of the disclosure are information and data authorized by a user or fully authorized by all parties.

Those of ordinary skill in the art may understand that implementation of all or some of the procedures of the embodiment method described above could be accomplished by a computer program instructing relevant hardware. The computer program may be stored in a non-volatile computer-readable storage medium. When the computer program is executed, the procedures of the foregoing method embodiments may be included. Any reference to the memory, the database, or other media used in the embodiments provided in the embodiments of the disclosure may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), an external cache memory, and the like. As an illustration and not a limitation, a RAM may be in various forms, such as a static random access memory (SRAM) or a dynamic random access memory (DRAM). The database involved in the various embodiments provided in the embodiments of the disclosure may include at least one of a relational database and a non-relational database. The non-relational database may include a blockchain-based distributed database, and the like, but is not limited thereto. The processor involved in the various embodiments provided in the embodiments of the disclosure may be a general-purpose processor, a central processing unit, a graphics processor, a digital signal processor, a programmable logic device, a quantum computing-based data processing logic device, and the like, but is not limited thereto.

The technical features of the foregoing embodiments may be combined in any manner, and in order to simplify the description, not all possible combinations of the technical features of the foregoing embodiments are described. However, as long as there is no conflict between the combinations of these technical features, they should be considered to be within the scope of the description in the disclosure.

The embodiments described above merely illustrate several implementations of the embodiments of the disclosure and are described relatively specifically and in detail, but should not be construed as limiting the patent scope of the embodiments of the disclosure. It should be noted that several variations and improvements may also be made by those of ordinary skill in the art without departing from the concept of the embodiments of the disclosure, and should fall within the scope of protection of the embodiments of the disclosure. Therefore, the scope of protection of the embodiments of the disclosure shall be subject to the appended claims.

## Claims

1. A screen mirroring method, **characterized in that** the method comprises:
sending a communication connection signal to an electronic device within a preset range in response to a preset trigger operation for a power-on signal of a head unit of a vehicle;
obtaining an action status of a target object corresponding to a vehicle seat when a matching signal fed back by the electronic device is received; and
displaying a display interface of the electronic device on the head unit when the action status meets a preset condition.

2. The method according to claim 1, **characterized in that** the obtaining an action status of a target object corresponding to a vehicle seat comprises:
obtaining scanned image data of the vehicle seat; and
determining, based on the scanned image data, the action status of the target object corresponding to the vehicle seat.

3. The method according to claim 1 or 2, **characterized in that** the action status comprises a target object-present state, and the displaying a display interface of the electronic device on the head unit when the action status meets a preset condition comprises:
obtaining, when the action status is the target object-present state, a first moment at which the action status transitions to the target object-present state and a second moment at which a seat belt status corresponding to the vehicle seat transitions to a locked state; and
displaying the display interface of the electronic device on the head unit when a duration between the first moment and the second moment is within a preset duration.

4. The method according to claim 3, **characterized in that** the preset condition comprises that the action status is the target object-present state and that the duration between the first moment and the second moment is within the preset duration, and after the obtaining an action status of a target object corresponding to a vehicle seat, the method further comprises:
displaying a screen mirroring operation interface on the head unit when the action status does not meet the preset condition.

5. The method according to claim 4, **characterized in that** after the displaying a screen mirroring operation interface on the head unit, the method further comprises:
receiving a trigger operation for rejecting screen mirroring in the screen mirroring operation interface, and presenting the screen mirroring operation interface in the form of a floating window.

6. The method according to any one of claims 1 to 5, **characterized in that** the preset condition comprises that the action status is a target object-absent state and that a vehicle door of the vehicle is in a closed state, and after the obtaining an action status of a target object corresponding to a vehicle seat, the method further comprises:
switching to a power-off state when the action status does not meet the preset condition.

7. The method according to any one of claims 1 to 6, **characterized in that** the sending a communication connection signal to an electronic device within a preset range comprises:
sending the communication connection signal to an electronic device within the preset range that is in a communicatively connected state, wherein the electronic device is in the communicatively connected state when the vehicle is unlocked.

8. The method according to any one of claims 1 to 7, wherein the preset trigger operation comprises that the vehicle door is opened to a preset angle.

9. A screen mirroring apparatus, **characterized in that** the apparatus comprises:
a sending module, configured to send a communication connection signal to an electronic device within a preset range in response to a preset trigger operation for a power-on signal of a head unit of a vehicle;
an obtaining module, configured to obtain an action status of a target object corresponding to a vehicle seat when a matching signal fed back by the electronic device is received; and
a display module, configured to display a display interface of the electronic device on the head unit when the action status meets a preset condition.

10. A vehicle, comprising a memory and a processor, wherein the memory stores a computer program, **characterized in that** when the processor executes the computer program, the steps of the screen mirroring method according to any one of claims 1 to 8 are implemented.

11. A computer-readable storage medium having a computer program stored thereon, **characterized in that** when the computer program is executed by a processor, the steps of the screen mirroring method according to any one of claims 1 to 8 are implemented.

12. A computer program product, comprising a computer program, **characterized in that** when the computer program is executed by a processor, the steps of the screen mirroring method according to any one of claims 1 to 8 are implemented.
